# EUROPÄISCHE PATENTANMELDUNG

(11) **EP 0 683 411 A1**
(43) Veröffentlichungstag der Anmeldung: **22.11.1995**
(21) Anmeldenummer: 95105655.5
(22) Anmeldetag: 13.04.1995
(51) Int. Cl.: G02B 13/14

(54) **Refraktives Breitband-IR-objektiv**

(30) Priorität: 21.05.1994 DE 4417888
(71) Anmelder: STEINHEIL OPTRONIK GmbH, D-85736 Ismaning (DE)
(72) Erfinder: Erdmann, Matthias, D-80333 München (DE)
(74) Vertreter: Pätzold, Herbert, Dr.-Ing.

(57) **Zusammenfassung**

In einem mehrlinsigen Infrarotobjektiv mit breitbandiger Farbkorrektur, insbesondere im Spektralbereich von 1.4 bis 5 µm, ist Silizium als Material für Linsen mit negativer Brennweite benutzt. Dabei bestehen die Linsen aus Materialien, die bezüglich ihres Dispersionsverlaufs aus drei unterschiedlichen Materialgruppen ausgewählt sind, von denen die erste Materialgruppe Materialien umfaßt, deren kurzwelligen Absorptionsbanden relativ nahe bei der kürzesten zu korrigierenden Wellenlänge liegen, die zweite Gruppe Materialien umfaßt, deren langwelligen Absorptionsbanden näher am zu korrigierenden Spektralbereich als die kurzwelligen liegen und die dritte Gruppe Materialien umfaßt, die mit ihren relativen Absorptionsbandenlagen zwischen den Materilien der ersten und zweiten Gruppen liegen.

## Beschreibung

Die Erfindung bezieht sich auf ein mehrlinsiges Infrarotobjektiv gemäß dem Oberbegriff des Anspruches 1.

Kameras, die in den üblichen infraroten Spektralbereichen arbeiten (3µm - 5µm und 8µm - 12µm), sind für Tageslicht nahezu blind und für das nahe infrarote Spektrum (1,4 µm bis 3 µm) blind. In diesen Spektralbereichen sind aber wichtige Informationen der Szene enthalten, sofern diese Spektren vorhanden sind. In aller Regel handelt es sich in diesen Spektralbereichen um sekundäres Licht in der Szene (Tageslicht, Scheinwerfer). So ist Fensterglas bis ca. 2,5 µm durchsichtig, Strukturen in der Landschaft sind in ihrer räumlichen Anordnung und Form besser erkennbar, wenn die Sonne sie beleuchtet und durch Licht und Schatten modelliert, und gedruckte und geprägte Schriften sind in Abhängigkeit vom verwendeten Farbstoff lesbar.

Moderne PtSi-Detektoren sind bis etwa 1.4 µm empfindlich. Bei IR-Kameras, die im 3-5 µm-Bereich (MIR-Bereich) arbeiten, wird das als störend empfunden, da das Bild im Spektralbereich 1,4 µm - 3 µm (SWIR-Bereich) das IR-Bild verschleiert. Eine 1.4 - 3 µm refraktive IR-Optik im üblichen Spektralbereich von 3-5µm Wellenlänge ist nach dem Stand der Technik ist bis 1.5 µm Wellenlänge nicht chromatisch korrigiert. Ist die Optik in diesem Spektralbereich aber noch teilweise transparent, so strahlt der kurzwellige Spektralbereich auf den Detektor ein und erzeugt dabei ein unscharfes Bild. Aus diesem Grunde wird in der Regel ein Filter eingeschaltet, das den kurzwelligen Anteil abblockt.

Aufgabe der Erfindung ist es, eine refraktive Optik mit gesteigerter Leistungsfähigkeit anzugeben, die im Spektralbereich von im wesentlichen 1.4 - 5 µm chromatisch korrigiert ist und somit aus beiden Spektralbereichen (SWIR/MIR) ein scharfes Bild darzustellen vermag. Ein Filter soll entfallen können.

Neben der gesteigerten Empfindlichkeit auch im MIR-Bereich soll auch die Möglichkeit bestehen, im SWIR-Bereich, z.B. bei Tageslicht durch Fensterscheiben schauen zu können, Schriften (Kennzeichen) lesen zu können und thermische Tarnungen weitgehend unwirksam machen zu können, da es nicht möglich ist, die Tarnung für beide Spektralbereiche gleichzeitig anzuwenden.

Um Abbildungen in diesen beiden unterschiedlichen Spektralbereichen zu realisieren, waren bisher neben reinen Spiegelteleskopen zwei getrennte Optiken (getrennte Kanäle) mit unterschiedlicher chromatischer Korrektur nötig, oder es mußte eine Dual-Band Optik eingesetzt werden, wobei der Lichtweg über einen dichroitischen Strahlteiler unterschiedlich verzweigt wird. In beiden Fällen sind die Korrekturzustände der Optiken in den unterschiedlichen Spektralbereichen verschieden. Die Realisierung von Spiegelteleskopen eignet sich dort, wo ein festes Sehfeld Zum Einsatz kommt und der höhere Preis für die asphärische Spiegelflächen keine Rolle spielt.

Eine refraktive IR-Optik im Bereich 3-5µm wird nac dem Stand der Technik aus positiven Linsen aus Silizium (Si) und negativen Linsen aus CaF₂, ZnS, ZnSe oder Germanium aufgebaut. Diese Vorgehensweise ist naheliegend, da Silizium in diesem Wellenlängenbereich das Material mit der geringsten Dispersion ist. Gleichzeitig hat Silizium eine sehr hohe Brechzahl und eine gute weitgehend temperaturunabhängige Transmission, im Gegensatz zu Germanium, dessen Transmission mit höherer Temperatur ganz erheblich abnimmt. Dabei ist Silizium ungiftig und verhältnismäßig billig. Silizium ist somit in diesem Wellenlängenbereich als das ideale "Kronglas" für Linsen mit positiver Brechkraft anzusehen. Diese übliche Vorgehensweise führt aber nicht zur Lösung der vorstehenden Aufgabe, ein Objektiv mit hinreichend guter Farbkorrektur zwischen etwa 1,4 µm und 5 µm zu schaffen.

Die Aufgabe wird erfindungsgemäß mit den kennzeichnenden Merkmalen des Anspruches 1 gelöst. Vorteilhafte Ausführungen ergeben sich aus den Merkmalen der Unteransprüche.

Die erfindungsgemäße Gruppe von Objektiven besitzt eine chromatische Korrektur über den gesamten Wellenlängenbereich von etwa 1.4 µm bis 5.0 µm. Eine derartig breitbandige Farbkorrektur wurde mit einem refraktiven System zunächst für unmöglich gehalten, zumal die Auswahl an Linsenmaterialien in diesem Spektralbereich sehr begrenzt ist und die Spektralbänder unmittelbar aneinanderliegen.

Um eine ausreichende Farbkorrektur zu erreichen, werden vorteilhafterweise mindestens drei Linsenmaterialien kombiniert. Die zur Korrektur verwendbaren Materialien gruppieren sich bezüglich ihres Dispersionverlaufs in drei Gruppen:
* Die erste Gruppe umfaßt Materialien, deren kurzwellige Absorptionsbande relativ nahe bei der kürzesten zu korrigierenden Wellenlänge (hier 1.4 µm) liegen. Die Dispersion dieser Materialien nimmt zu den kurzen Wellenlängen stark zu.
* Die zweite Gruppe umfaßt Materialien, deren langwellige Absorptionsbande näher am zu korrigierenden Spektralbereich liegen als dessen kurzwellige. Die Dispersion dieser Materialien nimmt zu den kurzen Wellenlängen ab und zu den langen Wellenlängen zu.
* Die dritte Gruppe umfaßt Materialien, die mit ihren relativen Absorptionsbandenlagen zwischen den Materialien der Gruppen 1 und 2 liegen. Die Dispersion dieser Materialien nimmt in der Regel zu den kurzen Wellenlängen hin leicht zu. Die Absorptionsbanden liegen relativ weit vom interessierenden Spektralbereich weg.

Typische und zweckmäßige Vertreter in diesen Gruppen sind z. B.:
* Silizium und verschiedene Chalkogenidgläser (z. B. As₂S₃ Handelsbezeichnung "Ig1.1" der Firma Vitron) in der Gruppe 1. Bei Chalkogenidgläsern handelt es sich um glasartig erschmolzene Materialkombinationen aus Elementen der Hauptgruppen IV-VI des Periodensystems mit guten optischen Eigenschaften im Wellenlängenbereich zwischen 0,8 µm und 14 µm.
* CaF₂, MgO und BaF₂ in der Gruppe 2
* ZnS, ZnSe und NaCl in der Gruppe 3
Die Zuordnung der IR-Materialien nach dieser Vorschrift ist nicht in allen Fällen eindeutig. So ist z. B. das unter der Bezeichnung "KRS5" im Handel erhältliche Thalliumbromidiodid sowohl in Gruppe 1, als auch in Gruppe 3 einsetzbar.

Zur chromatischen Korrektur können erfindungsgemäß die Materialien wie folgt eingesetzt werden:
Als "Kronglas" (niedrige Dispersion), d. h. bevorzugt für Linsen mit positiver Brennweite werden Materialien der Gruppe 3 eingesetzt.

Als "Flintglas" (hohe Dispersion), d. h. bevorzugt für Linsen mit negativer Brennweite wird eine Materialkombination aus zwei Materialien der Gruppen 1 und 2 eingesetzt. Besonders gut arbeiten die Kombinationen mit Silizium, also z. B. Si, CaF₂ oder Si, MgO.

Erfindungsgemäß wird ein Material wie Silizium bei dieser Art der chromatischen Korrektur für negative Linsen verwendet, und nicht wie sonst bei dieser Gruppe von Objektiven üblich für positive Linsen. Eine Optik aus ZnS-Si-CaF₂ arbeitet anschaulich also wie folgt: Der starke Anstieg der Dispersion im kurswelligen Bereich macht es erfindungsgemäß unmöglich, Silizium als "Kronglas" für die chromatische Korrektur einzusetzen. Silizium hat aber im langwelligen Bereich eine äußerst geringe Dispersion. Es ist somit nicht möglich, Silizium allein als "Flintglas" einzusetzen. Kombiniert man Silizium jedoch z.B. mit Calciumfluorid, so setzt sich dessen starke Dispersion im langwelligen Bereich durch, um die Farbkorrektur zu erreichen. Da die Dispersion von CaF₂ im kurzwelligen Bereich stark abnimmt, wird die Farbkorrekturwirkung des Siliziums hier praktisch kaum beeinflußt. Eine erfindungsgemäße Optik arbeitet also im kurzwelligen Bereich z.B. mit einer ZnS-Si-Farbkorrektur und im langwelligen Bereich z.B. mit einer ZnS-CaF₂-Farbkorrektur.

Beispiele für erfindungsgemäße Infrarot-Objektive und deren wichtigste Parameter sind nachstehend angegeben:

### Beispiel 1

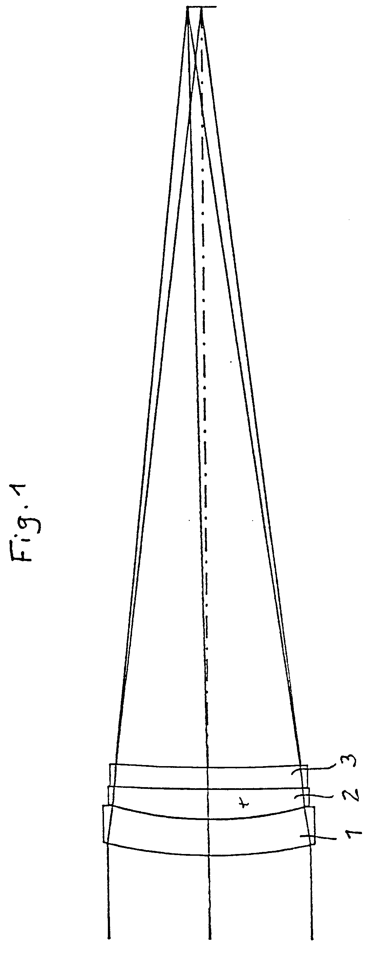

Dieses Beispiel betrifft den einfachsten Fall einer breitbandigen chromatischen Korrektur mit einem einfachen dreilinsigen "Apochromaten" für das Wellenlängenband von etwa 1.5-5µm. In Lichtrichtung der einfallenden Strahlen ist das Material der ersten Linse aus der Gruppe 1, das Material der zweiten Linse aus der Gruppe 3 und das Material der dritten Linse aus der Gruppe 2 ausgewählt. Ein solcher breitbandiger Apochromat ist in Fig. 1 dargestellt. Die aufeinanderfolgenden Linsen 1, 2 und 3 bestehen der Reihe nach aus Si, ZnS, MgO. Der Si-ZnS-MgO-Apochromat erreicht in der Bildmitte einen Strehlwert ψ = 0.96 und ist damit über das gesamte Wellenlängenband beugungsbegrenzt. Die Öffnungszahl beträgt *F*# = 4.

### Beispiel 2

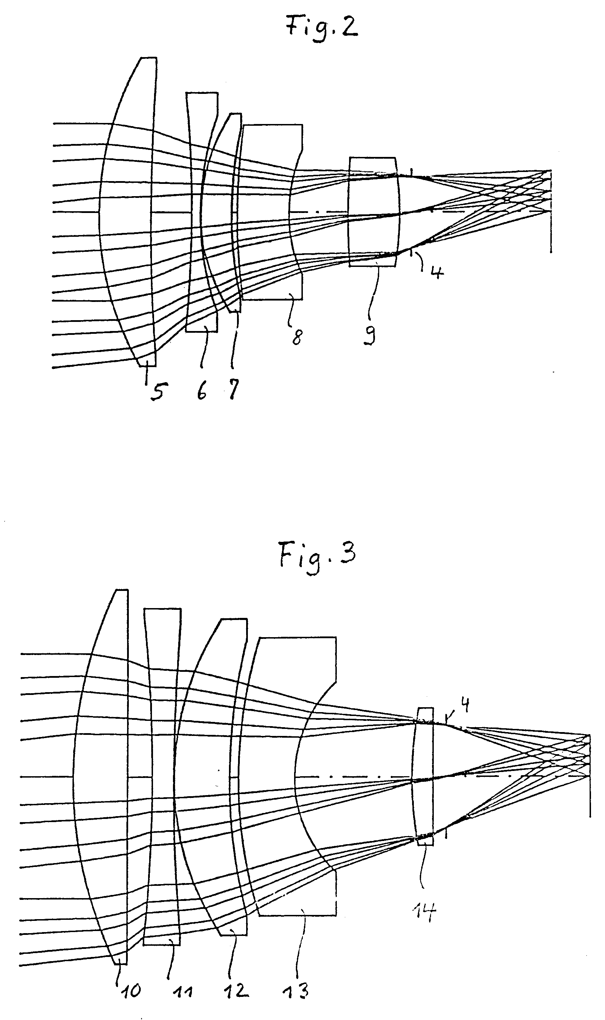

Dieses Beispiel zeigt ein fünflinsiges System mit einer Brennweite von 90 mm und einer Öffnungszahl von 2.0. Das in Fig. 2 dargestellte Objektiv hat eine Hinterblende 4 und ist somit einfach auf ein Dewar umzurechnen. In Lichtrichtung der einfallenden Lichtstrahlen sind die Linsenmaterialien der Reihe nach aus den Gruppen 3, 2, 3, 1 und 3 ausgewählt. Im Beispielsfalle bestehen die Linsen 5 bis 9 der Reihe nach aus ZnS, CaF₂, ZnS, Si, ZnS.

### Beispiel 3

Fig. 3 zeigt ein fünflinsiges System mit einer Brennweite von 90 mm und einer Öffnungszahl von 1.4. Die Materialfolge der Linsen 10 bis 15 ist der Reihe nach aus den Gruppen 3, 1, 3, 2 und 3 ausgewählt. Dabei sind die Negativlinsen gegenüber Beispiel 2 vertauscht. Das heißt, die Materialien der positiven Linsen 10, 12 und 14 sind entsprechend den Materialien der Linsen in Fig. 2 jeweils aus der Gruppe 3 ausgewählt und bestehen im Beispielsfalle jeweils aus ZnS, während das Material für die Negativlinse 11 aus der Gruppe 1 und das Material für die Negativlinse 13 aus der Gruppe 2 ausgewählt ist. Vorzugsweise besteht die zweite Linse 11 aus Silizium und die vierte Linse 13 aus calciumfluorid. Gegenüber Fig. 2 sind damit die Materialien der zweiten und vierten Linse 11 und 13 vertauscht. Eine entspechende Hinterblende wie im Beispiel 2 ist mit 4 bezeichnet.

### Beispiel 4

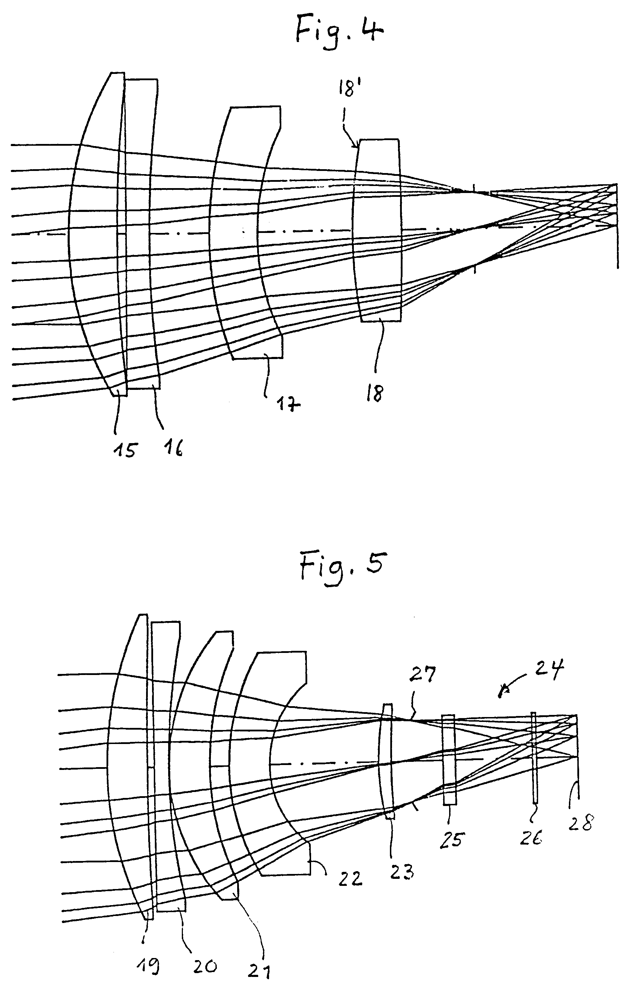

Fig. 4 zeigt ein aus Beispiel 5 abgeleitetes vierlinsiges System mit einer Brennweite von 90 mm und einer Öffnungszahl 2.0. Durch den Einsatz einer asphärischen Fläche konnte eine Linse eingespart werden. Dieses System hat am Bildrand eine geringfügig schlechtere Korrektur, sie dürfte aber für viele Applikationen ausreichend sein. Die Materialien der Linsen 15 bis 18 sind in Richtung der einfallenden Lichstrahlen der Reihe nach aus den Gruppen 3, 1, 2 und 3 ausgewählt. Im Beispielsfalle besteht die erste Linse 15 aus ZnS, die zweite Linse 16 aus Si, die dritte Linse 17 aus CaF₂ und die vierte Linse 18 aus ZnS. Die asphärische Fläche an der vierten Linse 18 ist mit 18' bezeichnet. Eine Hinterblende entsprechend Beispiel 2 und 3 ist mit 4 bezeichnet.

### Beispiel 5

In Fig. 5 ist ein fünflinsiges System mit einer Brennweite von 90 mm und einer Öffnungszahl 2.0 gezeigt. Die Linsen 19 bis 23 sind der Reihe nach aus den Materialien 3, 1, 3, 2 und 3 ausgewählt. Im Beispielsfalle besteht die erste Linse 19 aus ZnSe gegenüber ZnS in den Beispielen 2 bis 4. Die zweite bis fünfte Linse 20 bis 23 bestehen entsprechend Fig. 3 der Reihe nach aus Si, ZnS, CaF₂ und ZnS. An das System ist ein nur schematisch angedeutetes beispielhaftes Dewar 24 mit Abschlußscheibe 25, Filter 26, externem Cold-Shield 27 und dem Detektor 28 angeschlossen.

Weitere Varianten nach der erfindungsgemäßen Lehre lassen sich problemlos entwerfen. Hierbei sind insbesondere folgende Varianten leicht abzuleiten, wobei die Korrektur geringfügig verschlechtert sein kann, was aber für verschiedene Anwendungsfälle ausreichend sein kann. So ist in allen Beispielen ZnS durch ZnSe ersetzbar und Si ist durch ein Chalkogenidglas oder z.B. As₂S₃ ersetzbar. Verschiedentlich ist ZnS oder ZnSe auch durch Thalliumbromidiodid oder NaCl ersetzbar. Auch ist verschiedentlich Si durch Thalliumbromidiod und CaF₂ ist durch MgO und BaF₂ und entsprechende Materialien der Gruppe 2 ersetzbar.

Die Erfindung ist nicht auf die Ausführungsbeispiele beschränkt. Ausgehend hiervon ist der hier betreffende Fachmann ohne weiteres in die Lage versetzt, Änderungen und Ergänzungen vorzunehmen, ohne dabei den Rahmen der Erfindung zu verlassen.

Insbesondere kann ein erfindungsgemäßes Objektiv Teil einer komplexen dioptrischen oder katadioptrischen IR-Optik sein (z.B. eines Afokals oder eines Objektives mit Zwischenabbildung bzw. Re-Imager).

## Patentansprüche

1. Mehrlinsiges Infrarotobjektiv mit breitbandiger Farbkorrektur, dessen Linsen aus unterschiedlichen Materialien bestehen,
**dadurch gekennzeichnet,**
daß Silizium als Material für wenigstens eine Linse negativer Brechkraft im Spektralbereich von 1,4 µm bis 5 µm zur breitbandigen Farbkorrektor verwendet wird.

2. Objektiv nach Anspruch 1, dadurch gekennzeichnet, daß die Linsen aus Materialien bestehen, die bezüglich ihres Dispersionsverlaufs aus drei unterschiedlichen Materialgruppen ausgewählt sind, wobei die Linsen negativer Brennweite aus zwei verschiedenen Materialgruppen ausgewählt sind, von denen die erste Gruppe Materialien umfaßt, deren kurzwellige Absorptionsbanden relativ nahe bei der kürzesten zu korrigierenden Wellenlänge liegen, und die zweite Gruppe Materialien umfaßt, deren langwellige Absorptionsbanden näher am zu korrigierenden Spektralbereich als die kurzwelligen liegen, und wobei die Linsen positiver Brennweite aus einer Materialgruppe ausgewählt sind, die Materialien umfaßt, die mit ihren relativen Absorptionsbandenlagen zwischen den Materialien der ersten und der zweiten Materialgruppe liegen.

3. Objektiv nach Anspruch 2, dadurch gekennzeichnet, daß von wenigstens zwei Linsen mit negativer Brennweite das Material für die eine Linse aus der ersten Materialgruppe und das Material für die zweite Linse aus der zweiten Materialgruppe ausgewählt ist.

4. Objektiv nach den Ansprüchen 2 oder 3, dadurch gekennzeichnet, daß die erste Materialgruppe die Materialien Silizium, Chalkogenidgläser, Thalliumbromidiodid, die zweite Materialgruppe die Materialien CaF₂, MgO, BaF₂ und die dritte Materialgruppe die Materialien ZnS, ZnSe, NaCl, KRS5 umfaßt.

5. Objektiv nach Anspruch 2, dadurch gekennzeichnet, daß als Materialkombination Si-CaF₂ oder Si-MgO gewählt ist.

6. Objektiv nach wenigstens einem der vorstehenden Ansprüche, gekennzeichnet durch eine Farbkorrektur im kurzwelligen Bereich mit einer Materialkombination ZnS-Si und im langwelligen Bereich mit einer Materialkombination ZnS-CaF₂, wobei jeweils ZnS durch ZnSe oder KRS5, Si durch Chalkogenidglas oder KRS5 und CaF₂ vorzugsweise durch MgO und BaF₂ ersetzbar sind.

7. Objektiv nach wenigstens einem der vorstehenden Ansprüche, dadurch gekennzeichnet, daß ein dreilinsiger Apochromat für das Wellenlängenband 1.5 - 5 µm aus den Linsenmaterialien in der Aufeinanderfolge Si-ZnS-MgO besteht, wobei Si durch ein Chalkogenidglas und ZnS durch ZnSe und MgO vorzugsweise durch CaF₂ oder BaF₂ ersetzbar ist.

8. Objektiv nach wenigstens einem der vorstehenden Ansprüche, dadurch gekennzeichnet, daß ein fünflinsiges System für das Wellenlängenband 1.5 - 5 µm in Lichtrichtung aus der ersten, dritten und fünften Linse mit jeweils positiver Brennweite aus ZnS oder ZnSe, der zweiten Linse mit negativer Brennweite aus CaF₂, MgO oder BaF₂ und der vierten Linse mit negativer Brennweite aus Si oder Chalkogenidglas besteht.

9. Objektiv nach Anspruch 8, dadurch gekennzeichnet, daß die Materialien für die zweite und vierte Linse vertauscht sind.

10. Objektiv nach Anspruch 9, dadurch gekennzeichnet, daß eine der drei Linsen mit positiver Brennweite durch den Einsatz einer asphärischen Fläche ersetzt ist.

11. Verwendung des Objektives nach einem der vorstehenden Ansprüche in Verbindung mit einem Dewar.

12. Objektiv nach wenigstens einem der vorhergehenden Ansprüche, dadurch gekennzeichnet, daß eine oder mehrere Linsen jeweils eine oder zwei asphärische Flächen aufweisen.

13. Objektiv nach wenigstens einem der vorhergehenden Ansprüche, dadurch gekennzeichnet, daß das Objektiv Teil einer komplexen dioptrischen oder katadioptrischen IR-Optik ist.
